# DEMANDE DE BREVET EUROPEEN

(11) **EP 3 674 817 A1**
(43) Date de publication de la demande: **01.07.2020**
(21) Numéro de dépôt: 18215880.8
(22) Date de dépôt: 24.12.2018
(51) Int. Cl.: G04B 37/22, G04B 45/00, G04B 19/12, G04B 3/04

(54) **PROCEDE DE FABRICATION D'UN ARTICLE DECORATIF**

(71) Demandeur: Meco S.A., 2540 Grenchen (CH)
(72) Inventeur: AVRIL, Hervé, 2345 Les Breuleux (CH)
(74) Mandataire: ICB SA

(57) **Abrégé**

L'invention concerne un procédé de fabrication d'un article décoratif (2) comprenant les étapes suivantes de:
- Réalisation d'une ébauche par moulage par injection d'une matière comprenant un matériau métallique,
- Usinage et/ou polissage de l'ébauche pour former un produit,
- Formage du produit pour imprimer un motif (3) en relief ou en creux sur une partie de la surface dudit produit, ledit produit avec le motif (3) formant l'article décoratif.

L'invention concerne également un article décoratif, notamment une pièce d'habillage en horlogerie réalisée dans un matériau fritté, ledit matériau fritté comportant sur une partie de sa surface un motif (3) en relief ou en creux réalisé par formage. Préférentiellement, le matériau fritté est un alliage de titane grade 5 (Ti6V4Al) ou un acier inoxydable.

## Description

### DOMAINE TECHNIQUE

La présente invention se rapporte à un procédé de fabrication par MIM (*Metal Injection Molding*) d'un article décoratif, notamment d'une pièce d'habillage en horlogerie. Plus précisément, il s'agit d'un procédé de fabrication d'un article décoratif destiné après le moulage par injection et d'éventuelles étapes d'usinage ou finissage, à être estampé ou étamper pour imprimer une structure en relief ou en creux sur une partie de la surface de l'article. Elle se rapporte également à l'article issu du procédé de fabrication.

### ART ANTERIEUR

De nombreux horlogers font usage de logos en creux ou en relief qui rendent leur marque visible sur la pièce d'horlogerie. De nos jours, le formage à froid est la manière la plus économique de créer une impression en relief ou en creux avec un très bon fini de surface sur des composants métalliques. Certains matériaux peuvent présenter une haute limite élastique qui va nécessiter d'appliquer des contraintes importantes lors du formage à des fins de marquage du composant. En particulier, les alliages de titane dont le grade 5 (Ti-6Al-4V) recherchés pour leurs bonnes propriétés mécaniques combinées à une faible densité sont très difficiles à estamper. Cela est particulièrement vrai pour des composants horlogers tels que les couronnes, poussoirs ou soupapes fabriqués à partir de fils de 5-15 mm de diamètre soumis à un écrouissage du matériau lors du tréfilage ou de l'étirage. L'application de contraintes élevées notamment lors des opérations d'estampage entraîne un taux d'usure important des outils de formage avec, pour corollaire, une augmentation des coûts de fabrication. Par ailleurs, la difficulté d'estamper les pièces réalisées dans des matériaux à haute limite élastique entraîne un taux de rebus des pièces important.

### RESUME DE L'INVENTION

La présente invention a pour objet de remédier aux désavantages précités en proposant un procédé de fabrication permettant de réduire le taux de rebus et l'usure des outils d'estampage/étampage.

A cette fin, la présente invention propose un procédé de fabrication d'un article décoratif, et, en particulier d'une pièce d'habillage en horlogerie, comprenant une étape de réalisation d'une ébauche par moulage par injection également connu sous le nom de procédé MIM selon lequel un métal est mélangé avec un liant, puis injecté dans un moule; la pièce est ensuite « déliantée » dans un four sous atmosphère contrôlée, puis frittée. Ce procédé évite l'écrouissage inhérent au procédé de fabrication par déformation tel que l'étirage, le laminage, le tréfilage, etc. Il s'ensuit que l'étape de formage, notamment d'estampage ou d'étampage, est réalisée avec des contraintes moins importantes, ce qui limite l'usure des outils d'une part et, d'autre part, facilite l'estampage/étampage et donc réduit le taux de rebus par rapport aux articles estampés/étampés réalisés à partir de matériaux classiques étirés, laminés ou tréfilés

Préférentiellement, l'ébauche issue du moulage par injection forme un produit semi-fini destiné à être mis à dimension lors d'une étape ultérieure d'usinage, avant le formage. Cela permet de fabriquer des articles décoratifs de forme variée partant d'un moule avec une géométrie donnée qui peut être simple, par exemple ayant la forme d'un lopin ou d'un lingot. Il s'ensuit une réduction des coûts de fabrication.

Le procédé selon l'invention est plus spécifiquement adapté à la fabrication d'articles décoratifs réalisés dans des matériaux présentant des limites élastiques élevées tels que le Ti6Al4V ou encore des aciers inoxydables. Cependant, la présente invention n'exclut pas d'utiliser également ce procédé pour des matériaux présentant des limites élastiques moins élevées.

La présente invention se rapporte également à l'article décoratif issu de ce procédé qui est caractérisé par sa structure frittée avec sur une partie de la surface le motif en creux ou en relief réalisé par formage.

L'article décoratif est plus spécifiquement une pièce d'habillage en horlogerie et, en particulier, une soupape, une couronne ou un poussoir.

D'autres caractéristiques et avantages de la présente invention apparaîtront dans la description suivante d'un mode de réalisation préféré, présenté à titre d'exemple non limitatif en référence aux dessins annexés.

### BREVE DESCRIPTION DES FIGURES

Les figures 1(a)-(c) illustrent schématiquement les différentes étapes mises en oeuvre lors de la fabrication selon l'invention d'une soupape.
La figure 2 représente une vue tridimensionnelle d'une soupape obtenue avec le procédé selon l'invention.

### DESCRIPTION DETAILLEE

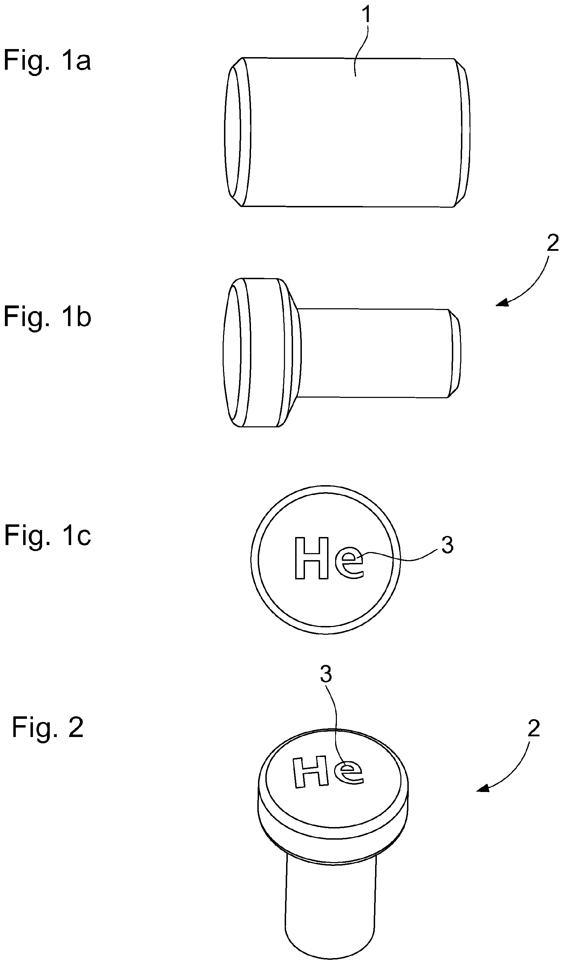

La présente invention se rapporte à un procédé de fabrication d'un article décoratif réalisé dans un matériau métallique. L'article décoratif peut être un élément constitutif de montres, bijoux, bracelets, broches, colliers, etc. Dans le domaine horloger, l'article peut être une pièce d'habillage telle qu'une soupape, un poussoir, une couronne, une carrure, un fond, une lunette, un maillon de bracelet, un fermoir de bracelet, un cadran, etc. Plus particulièrement, il s'agit d'un organe de commande tel qu'une couronne ou un poussoir, ou de manière plus générale d'un organe actionnable par un utilisateur tel qu'une soupape. A titre illustratif, une soupape à hélium 2 avec le logo He, référencé 3, sur la tête de la soupape, réalisée avec le procédé selon l'invention est représentée à la figure 2. L'article est préférentiellement réalisé dans un alliage de titane tel que le grade 5 (Ti-6Al-4V) qui comporte en poids 6% d'aluminium et 4% de vanadium. Il peut également s'agir d'un acier inoxydable et préférentiellement d'un acier inoxydable austénitique sans nickel tel que la nuance Böhler P570 ou avec nickel tel que la nuance 316L.

Le procédé de fabrication de l'article comporte successivement une étape de moulage par injection désigné également par procédé MIM (Metal Injection Moulding) d'une ébauche, une étape d'usinage et/ou de polissage de l'ébauche et une étape de formage pour imprimer un motif en relief ou en creux sur l'ébauche usinée et/ou polie. Préférentiellement, l'ébauche est un produit semi-fini destiné à être mis à dimension lors de l'étape d'usinage. Ainsi, comme schématisé aux figures 1a-c pour une soupape 2, la fabrication par MIM peut consister à fabriquer un lopin cylindrique 1 de dimension standard (fig.1a), qui est ensuite décolleté et poli pour lui donner la géométrie et la finition voulues (fig.1b). Cette variante est préférée car elle permet de réaliser un ensemble de pièces présentant des géométries différentes à partir d'un même moule. Il est évident que la forme du moule est adaptée en fonction du type d'article à réaliser et pourrait présenter une autre forme simple comme une forme de lingot. Il est également envisageable que l'ébauche issue du procédé MIM présente une géométrie sensiblement égale à celle du produit fini. Dans ce cas, l'étape d'usinage et/ou de polissage s'apparente à une étape de finition plutôt que de mise à dimension. Ensuite, le produit issu de l'usinage et/ou du polissage est estampé pour imprimer le motif 3 (fig.1c) qui est en relief dans l'exemple illustré.

Plus en détail, le procédé de fabrication comporte les étapes suivantes:
a) Réalisation d'une ébauche par moulage par injection d'une matière comprenant un matériau métallique. De manière connue, l'étape de fabrication par moulage par injection, aussi dit MIM, de l'ébauche consiste à préparer un feedstock comprenant la poudre métallique et un système de liant organique (paraffine, polyéthylène, etc.). Ensuite, le feedstock est injecté et délianté, par exemple par dégradation thermique ou par dissolution dans un solvant. L'ébauche est ensuite frittée. Selon l'invention, la poudre métallique a un d50 compris entre 0.1 et 20 µm, de préférence entre 8 et 15 µm, et le frittage est réalisé à une température comprise entre 1100 et 1500°C, de préférence entre 1200 et 1350°C, pendant un temps compris entre 1 et 10h, de préférence entre 2 et 6h, sous une atmosphère inerte par ex. d'argon.
b) Usinage et/ou de polissage de l'ébauche pour obtenir un produit. L'usinage peut être réalisé par toute technique d'enlèvement de matières.
c) Formage du produit pour imprimer un motif en relief ou en creux sur une partie de la surface dudit produit. La frappe finale pour imprimer le motif, qu'on peut aussi qualifier de structure, en creux ou en relief est préférentiellement réalisée à froid. Elle peut être réalisée en une ou plusieurs passes, éventuellement avec un traitement thermique entre les passes.

Après le formage, le produit peut être soumis à un traitement de terminaison tel qu'un traitement électrochimique (anodisation, rhodage, etc) ou encore un traitement de décoration comme un traitement de satinage ou de polissage.

L'article issu du procédé de fabrication a pour caractéristique d'être réalisé dans un matériau fritté comprenant sur une partie de sa surface un motif en creux ou en relief réalisé par formage.

## Revendications

1. Procédé de fabrication d'un article décoratif comprenant les étapes suivantes de:
- Réalisation d'une ébauche par moulage par injection d'une matière comprenant un matériau métallique,
- Usinage et/ou polissage de l'ébauche pour obtenir un produit,
- Formage du produit pour imprimer un motif (3) en relief ou en creux sur une partie de la surface dudit produit, ledit produit avec le motif (3) formant l'article décoratif.

2. Procédé selon la revendication 1, **caractérisé en ce que** ledit matériau métallique est un alliage de titane ou un acier inoxydable.

3. Procédé selon la revendication 2, **caractérisé en ce que** ledit alliage de titane est un alliage Ti-6Al-4V.

4. Procédé selon la revendication 2, **caractérisé en ce que** l'acier inoxydable est une nuance Böhler P570 ou 316L.

5. Procédé selon l'une quelconque des revendications précédentes, **caractérisé en ce que** l'article décoratif est une pièce d'habillage en horlogerie choisie parmi la liste comprenant un poussoir, une couronne, une soupape (2), une carrure, un fond, une lunette, un maillon de bracelet, un fermoir de bracelet et un cadran.

6. Procédé selon l'une quelconque des revendications précédentes, **caractérisé en ce que** l'ébauche est un produit semi-fini soumis à l'étape d'usinage pour obtenir ledit produit ayant des dimensions sensiblement égales à celles de l'article décoratif.

7. Procédé selon la revendication 6, **caractérisé en ce que** l'article décoratif est une pièce d'habillage en horlogerie choisie parmi une soupape (2), une couronne et un poussoir et **en ce que** le produit semi-fini est un lopin (1) cylindrique.

8. Procédé selon la revendication 7, **caractérisé en ce que** le lopin (1) cylindrique est soumis à l'étape d'usinage par décolletage avant l'étape de formage.

9. Procédé selon l'une quelconque des revendications 1 à 5, **caractérisé en ce que** l'ébauche issue de l'étape de moulage présente des dimensions sensiblement égales à celles de l'article décoratif.

10. Procédé selon l'une quelconque des revendications précédentes, **caractérisé en ce que** l'étape de formage est réalisée à froid.

11. Procédé selon la revendication 10, **caractérisé en ce que** l'étape de formage à froid est réalisée en plusieurs passes avec un traitement thermique entre les passes.

12. Procédé selon l'une quelconque des revendications précédentes, **caractérisé en ce que** l'étape de réalisation d'une ébauche comprend les sous-étapes suivantes de :
a) Réalisation d'un feedstock comprenant une poudre du matériau métallique et un système de liant organique, ladite poudre du matériau métallique ayant un d50 compris entre 0.1 et 20 µm, de préférence entre 8 et 15 µm,
b) Injection pour former l'ébauche,
c) Déliantage de l'ébauche,
d) Frittage à une température comprise entre 1100 et 1500°C, de préférence entre 1200 et 1350°C, pendant un temps compris entre 1 et 10h, de préférence entre 2 et 6h, sous une atmosphère inerte.

13. Procédé selon l'une quelconque des revendications précédentes, **caractérisé en ce que**, après l'étape de formage, le produit avec le motif (3) est soumis à un traitement de terminaison tel qu'un traitement électrochimique, de satinage ou de polissage.

14. Article décoratif, **caractérisé en ce qu'**il est réalisé dans un matériau fritté, ledit matériau fritté comportant sur une partie de sa surface un motif (3) en relief ou en creux réalisé par formage.

15. Article décoratif selon la revendication 14, **caractérisé en ce qu'**il s'agit d'une pièce d'habillage en horlogerie choisie parmi la liste comprenant un poussoir, une couronne, une soupape (2), une carrure, un fond, une lunette, un maillon de bracelet, un fermoir de bracelet.

16. Article décoratif selon la revendication 14 ou 15, **caractérisé en ce que** le matériau fritté est réalisé dans un alliage de titane ou dans un acier inoxydable.

17. Article décoratif selon la revendication 16, **caractérisé en ce que** l'alliage de titane est un alliage Ti6Al4V et **en ce que** l'acier inoxydable est une nuance Böhler P570 ou 316L.
